# FASCICULE DE BREVET EUROPEEN

(11) **EP 2 181 683 B1**
(45) Date de publication et mention de la délivrance du brevet: **03.07.2013**
(21) Numéro de dépôt: 08168086.0
(22) Date de dépôt: 31.10.2008
(51) Int. Cl.: A61G 5/10, B62B 5/04

(54) **Fauteuil roulant**
Rollstuhl
Wheelchair

(43) Date de publication de la demande: 05.05.2010
(73) Titulaire: Invacare International Sàrl, 1196 Gland (CH)
(72) Inventeur: Lauret, Aurélie, 37510, Villandry (FR); Da Cunha, Wilfrid, 37190, Druye (FR); Roncin, Jean-Michel, 37100, Tours (FR)
(74) Mandataire: Ganguillet, Cyril

(56) Documents cités:
- DE-A1- 3 133 636
- DE-U1- 20 113 611
- DE-U1- 29 823 028
- DE-U1-202004 000 861
- US-A1- 2006 273 541

## Description

### Domaine technique

La présente invention concerne un fauteuil roulant du type coquille comportant une coquille, un châssis et un équipement de roues porteuses.

### Etat de la technique

Les fauteuils roulants du type coquille sont des fauteuils de maintien et de confort destinés en particulier aux personnes ayant des difficultés pour se maintenir en position assise sans une aide. Ce type de fauteuil comporte, de manière générale, une partie supérieure appelée "coquille", montée sur un châssis comportant un certain nombre de roues, dont les roues avant au moins sont orientables. Il comporte aussi un dispositif d'appui pour les jambes avec une palette, ou plaque repose-pied, et un appui de mollet.

Pour assurer une production industrielle efficace des fauteuils roulants de ce type, il est nécessaire de concilier le mieux possible diverses contraintes, notamment dans les domaines de l'esthétique, de la rationalisation des composants, de la simplification des montages, ainsi que de la tenue des stocks, tout en tenant compte des besoins et des désirs variés des utilisateurs.

Les fauteuils roulants du type coquille que l'on trouve actuellement sur le marché peuvent être classés en deux catégories différentes selon le type de châssis qu'ils comportent et qui répondent à des besoins différents des utilisateurs, à savoir soit un châssis à cinq roues, chacune des roues étant constituée par des petites roulettes destinées à une utilisation en intérieur, soit un châssis à quatre roues, les roues étant dans ce cas plus grandes et destinées à une utilisation en extérieur. Le principal inconvénient de la première catégorie est que, étant particulièrement bien adapté à une utilisation en intérieur, le fauteuil est mal adapté à une utilisation en extérieur. De même, en ce qui concerne la seconde catégorie, celle-ci est bien adaptée pour une utilisation en extérieur mais mal adaptée pour une utilisation en intérieur.

Le document DE 202004000861 U présente un système à deux trains de roues qui présente l'inconvénient d'alourdir et d'encombrer le fauteuil.

### Divulgation de l'invention

Un des buts de la présente invention est de remédier aux inconvénients précités en proposant un fauteuil roulant du type coquille comportant un châssis agencé de façon à permettre à l'utilisateur du fauteuil de remplacer facilement un équipement de roues porteuses à cinq roues indépendantes de petites dimensions, prévu pour l'intérieur, par un équipement à quatre roues, dont deux sont d'un diamètre relativement grand, et reliées par un essieu coaxial muni d'un mécanisme de blocage au pied, plus particulièrement en vue d'une utilisation à l'extérieur.

Un autre but de la présente invention est de proposer un mécanisme de blocage au pied de l'équipement à quatre roues destiné à une utilisation en extérieur, à actionnement indépendant et efficace sur les deux roues, simple à réaliser et peu coûteux, et permettant de respecter l'esthétique du fauteuil.

A cet effet, la présente invention concerne un fauteuil roulant du type coquille comportant une coquille, un châssis et un équipement de roues porteuses tels que définis dans les revendications annexées.

### Brève description des dessins

On décrit ci-après, à titre d'exemple non limitatif, une forme d'exécution du fauteuil selon l'invention, représentée au dessin annexé.

Au dessin :
- les figs 1 et 2 montrent le fauteuil en perspective, respectivement de trois quart arrière et de trois quart avant, dans son agencement avec cinq roues porteuses,
- les figs 3 et 4 montrent de la même manière le fauteuil dans son agencement avec quatre roues porteuses et un mécanisme de blocage,
- les figs 5 et 6 montrent également en perspective et de trois quart arrière le châssis du fauteuil avec les agencements à cinq et à quatre roues respectivement,
- la fig. 7 est une vue en plan de dessus du châssis avec l'équipement à quatre roues porteuses,
- les figs 8 et 9 montrent dans la même présentation que les précédentes les éléments complémentaires destinés à être reliés au châssis pour donner les agencements à cinq ou à quatre roues porteuses respectivement,
- les figs 10 et 11 sont des vues en perspective de détails expliquant le mécanisme de blocage au pied associé au palier de l'une des roues porteuses principales dans l'équipement à quatre roues, et
- les figs 12 et 13 sont des vues en perspective de détails montrant respectivement la partie arrière d'un longeron de châssis et la garde pivotante du mécanisme de blocage au pied dans l'équipement à quatre roues du fauteuil décrit.

### Description détaillée des modes d'exécution de l'invention

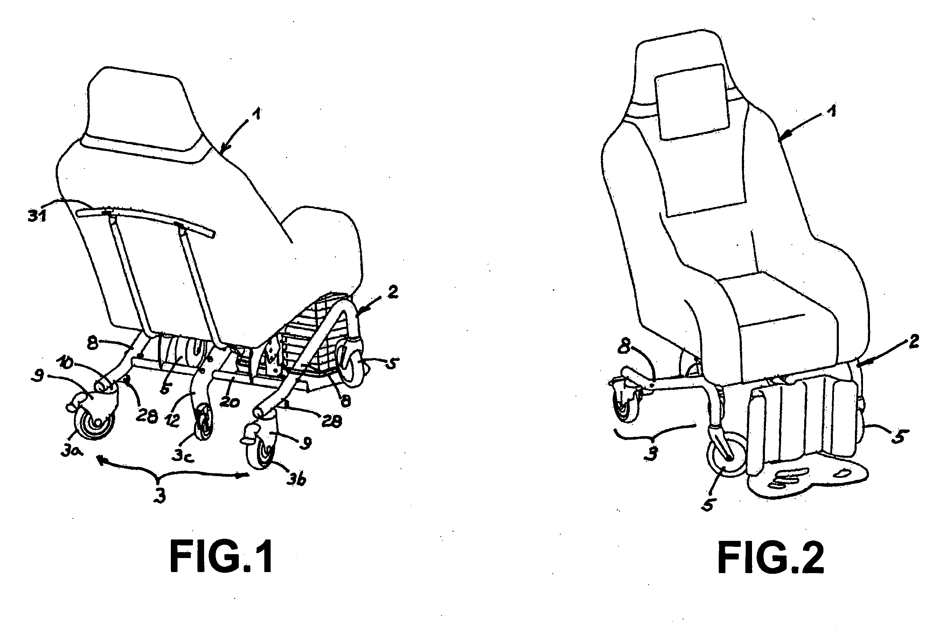

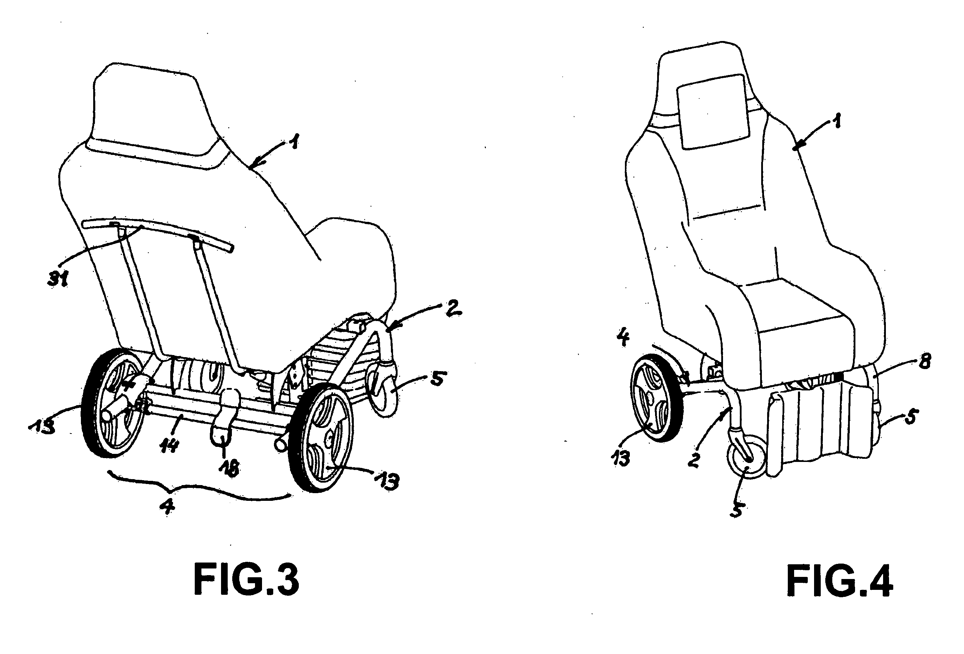

Le fauteuil coquille représenté dans son ensemble aux figs 1 à 4 comporte une coquille 1 formée d'un matériau rigide et léger, un châssis 2 qui supporte la coquille 1 et un équipement de roues porteuses 3 (figs 1 et 2) ou 4 (figs 3 et 4), ces équipements étant partiellement différents. Dans sa fourniture complète, le fauteuil comporte donc outre le châssis 2 avec un train de roues permanent formé de deux roues 5 disposées à l'avant du châssis 2, un choix de deux trains 3, 4, complémentaires au train permanent 5, interchangeables, permettant de modifier l'équipement des roues porteuses selon deux possibilités. Les figs 1 et 2 montrent le premier agencement possible 3 destiné à une utilisation en intérieur, et les figs 3 et 4 le second agencement 4 destiné à une utilisation en extérieur. Le châssis 2 est encore équipé d'un organe de guidage 31 qui s'étend dans le dos de la coquille 1 pour faciliter le déplacement du fauteuil. Cet organe de guidage 31 est visible à la fig. 1 et à la fig. 3.

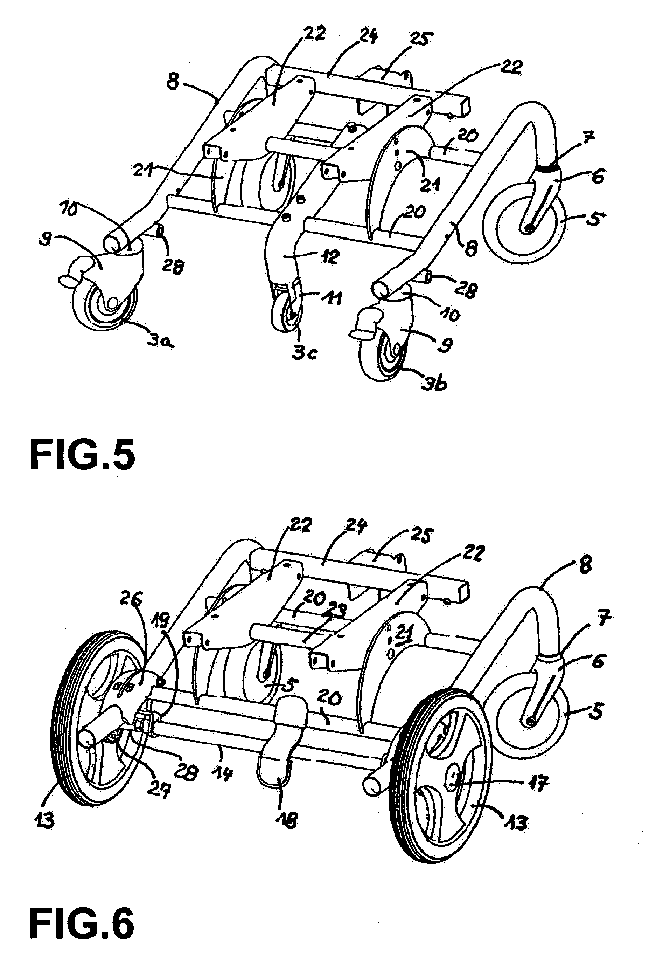

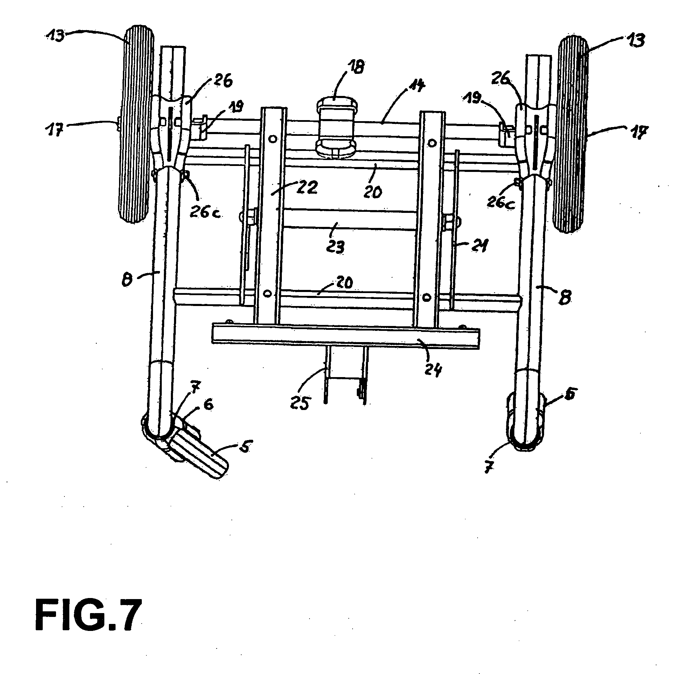

La fig. 5 représente le châssis 2 équipé de l'agencement 3 tandis que ce même châssis 2 est représenté avec l'agencement 4 à la fig. 6. Selon les fig. 5 et 6, le train des roues porteuses avant 5 comporte deux roues pivotant librement chacune sur une fourche 6 qui est articulée elle-même autour d'un axe vertical 7 légèrement décalé vers l'arrière, sur l'extrémité avant de l'une de deux barres rigides 8. Celles-ci font partie du châssis 2. Celui-ci, comme le montre aussi la fig. 7, est constitué de segments de profilés et d'éléments découpés et pliés qui sont rigidement fixés les uns aux autres. Les deux barres rigides 8 qui sont pliées en S forment les longerons du châssis. Elles sont reliées par deux barres transversales 20 de façon à former un quadrilatère qui est rigidifié par deux plaques parallèles 21 découpées en arc de cercle. A ces plaques sont fixés deux éléments parallèles 22 reliés par une traverse 23. Enfin, devant les éléments 22, est encore fixée une traverse avant 24 supportant une armature 25 destinée à recevoir un repose-pied (non représenté). Les éléments de structure 22 sont évidemment destinés à supporter la coquille 1.

On reprendra maintenant la description des trains partiels 3 et 4 représentés aux figs 5 à 9.

Le train partiel 3 destiné à l'équipement à cinq roues comporte deux roues identiques 3a, 3b pivotant dans des fourches 9 qui sont elles-mêmes reliées librement par des articulations 10 d'axes verticaux à chacune des barres 8, à l'extrémité opposée aux fourches 6. Ces roues 3a et 3b auront par exemple un diamètre de six pouces. Toujours à la fig. 5, on voit que le train partiel 3 comporte encore une roue 3c centrale qui pourrait avoir par exemple trois ou quatre pouces, montée à pivotement libre sur une fourche 11 articulée autour d'un axe situé dans le plan vertical par rapport à un bras d'armature 12. Celui-ci est fixé de manière amovible aux barres transversales 20 du châssis 2 .

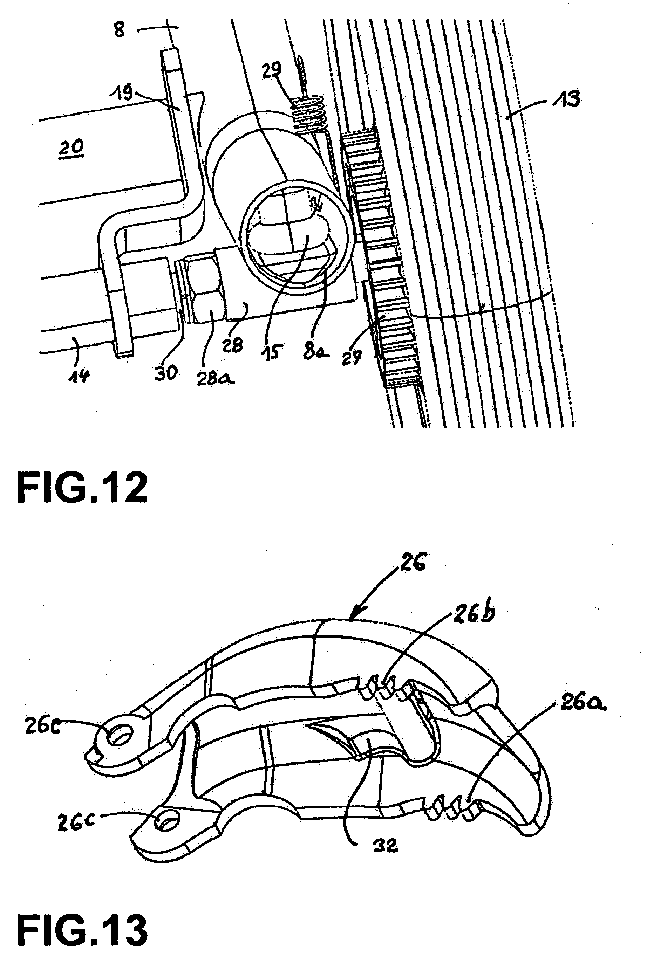

Selon la fig. 6 le châssis 2, toujours équipé du train partiel des roues avant 5 comporte, en lieu et place du train partiel 3, le train partiel 4 dont les composants comprennent deux roues 13, par exemple de douze pouces. Chacune des roues 13 est montée sur le châssis 2 au moyen d'une vis 30 (dont l'extrémité est visible à la fig. 12) traversant la roue et un manchon 28 solidaire de l'extrémité arrière du longeron 8. La roue est disposée contre l'extrémité dudit manchon 28 située du côté extérieur du châssis et ladite vis coopère avec un écrou 28a disposé à l'autre extrémité du manchon 28. Les deux roues 13 pivotent librement aux extrémités des manchons 28 et sont donc coaxiales sur les deux côtés du châssis 2.

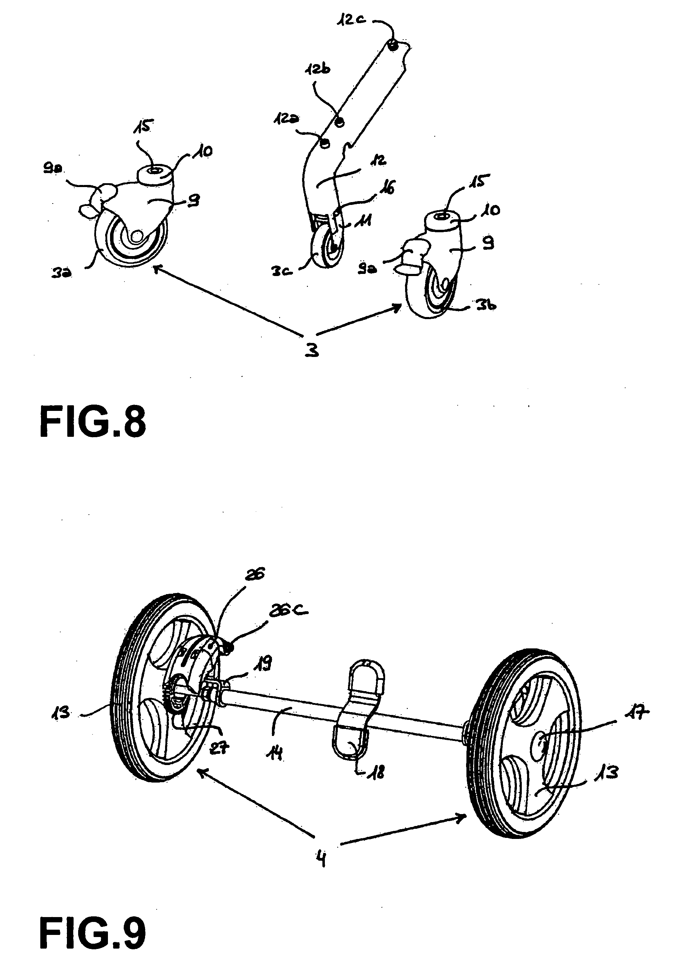

La composition détaillée de chacun des trains partiels interchangeables 3 et 4, dont la conception est l'une des particularités importantes du fauteuil décrit, ressortira des figs 8 et 9.

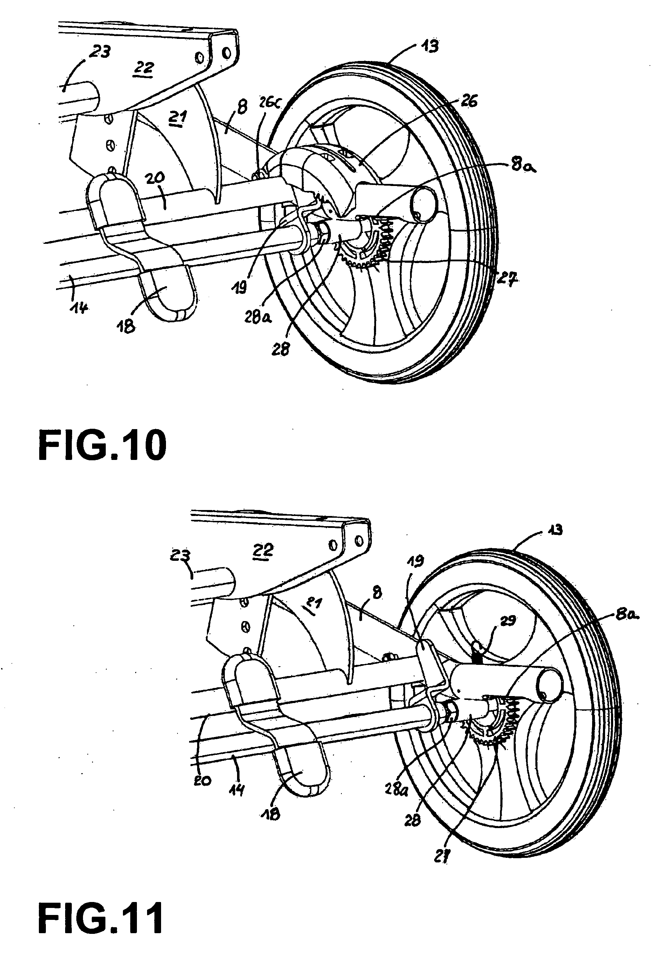

La fig. 8 montre les trois roues 3a, 3b et 3c. Les fourches 9 sur lesquelles pivotent les roues 3a et 3b ont des flancs triangulaires qui recouvrent les parties mobiles les plus apparentes des roues et sont pourvues d'un frein manuel 9a. Pour assurer l'orientation de chaque roue 3a ou 3b, un système de pivotement à axe vertical est intégré à l'intérieur de chaque fourche 9 dans une position déportée vers l'avant par rapport à l'axe propre de la roue. L'articulation 10 de chacune de ces roues 3a, 3b comporte un élément de fixation 15 qui vient se loger à l'intérieur d'une découpure 8a ménagée à l'extrémité arrière de chaque longeron 8 du châssis (figs 11 et 12, voir plus loin). Quant à la roue 3c, la fourche 11 dans laquelle elle est montée comporte une articulation 16 reliée à demeure au bras d'armature 12. Celui-ci est conçu pour être fixé au châssis 8 lors de la mise en place de l'équipement 3 à cinq roues. Il comporte des éléments de fixation opérables manuellement 12 a, 12b, 12c qui permettent de fixer le bras 12 aux barres transversales 20 du châssis 2, comme on le voit à la fig. 5.

La fig. 9 montre le train partiel 4 que l'utilisateur du fauteuil peut mettre en place au lieu du train 3, par exemple en vue d'un emploi à l'extérieur. Les deux roues 13, ayant par exemple un diamètre de douze pouces, pivotent librement et coaxialement à l'extrémité des manchons 28 comme décrit plus haut. Le train partiel 4 est encore équipé d'un mécanisme de blocage au pied qui comprend un arbre 14 monté en rotation libre sur les extrémités 30 des vis de fixation des roues 13, le montage dudit arbre 14 s'effectuant au moment du montage des roues 13. Approximativement au milieu de l'arbre 14 est monté un levier à pied 18 permettant de faire pivoter l'arbre 14 autour de son axe. Aux deux extrémités de cet arbre, des leviers de blocage 19 réagissent au mouvement de rotation de l'arbre 14. Ces leviers coopèrent avec deux pièces de garde 26 articulées sur les éléments 8 du châssis 2 et munies de secteurs dentés pour permettre la rotation libre des roues 13 ou au contraire les bloquer. Ces détails de réalisation sont mieux apparents aux figs 10 à 13.

A la fig. 10, l'extrémité arrière d'un des longerons de châssis 8 est visible, ainsi que la traverse 20 arrière, une des plaques arquées 21, un des supports 22 de la coquille 1 et la barre transversale 23. La roue 13 comporte dans son flanc intérieur une denture 27 qui entoure son moyeu (non visible) traversé par sa vis de fixation. On voit également l'arbre 14 monté en rotation libre sur les extrémités des vis 30. Comme on l'a déjà dit, le levier à pied 18 est solidaire de l'arbre 14 et sa rotation provoque celle des leviers de blocage 19 qui commandent les pièces de garde 26. La fig. 13 montre une de celles-ci. C'est une pièce de forme arquée à la manière d'une carapace, symétrique par rapport à un plan longitudinal, dont les deux flancs présentent des secteurs dentés 26a et 26b. L'un de ceux-ci coopère avec la denture 27. La pièce de garde 26 présente à son extrémité avant des oeillets 26c au moyen desquels elle est articulée sur le longeron de châssis 8 devant la barre transversale 20.

Considérant les figs 10 à 13, on comprend que chaque pièce de garde 26 est sollicitée en permanence par un ressort 29 accroché à l'intérieur de l'extrémité arrière du longeron 8. En position de blocage du levier à pied 18, le secteur denté 26a de la pièce de garde située sur le côté droit est engagé dans la denture 27 de droite, alors que le secteur denté 26b de la pièce de garde située sur le côté gauche est engagée dans la denture de gauche. En position de déblocage, les deux pièces de garde 26 sont soulevées par l'action des leviers 19 venant s'appuyer, à l'encontre des ressorts 29, contre l'une des deux parties creuses 32 en forme de demi-lune situées à l'intérieur de la pièce de garde 26. Comme les roues 13 sont indépendantes, au moment du blocage, les ressorts 29 provoquent l'engagement des secteurs dentés 26a, respectivement 26b dans les dentures 27 indépendamment, ce qui est très important, puisqu'il est rare que la position de freinage (à savoir la position de la roue pour laquelle les dentures 27 sont dans une position permettant l'engagement des secteurs dentés 26a, respectivement 26b) d'un côté coïncide exactement avec la position de freinage de l'autre côté. Ainsi, lors du verrouillage du frein, le mouvement de rotation de la barre centrale 14 libère les deux pièces de garde 26. Si les secteurs dentés 26a, respectivement 26b de l'une desdites pièces de garde 26 reste en appui sur les dents de la denture 27 correspondante, les secteurs dentés 26b, respectivement 26a de l'autre pièce de garde 26 ne sont pas empêchés de s'engager dans la denture 27 correspondante, après quoi un faible mouvement du fauteuil permet aux premiers secteurs dentés de s'engager à leur tour.

L'équipement complet décrit ci-dessus permet de répondre facilement et rapidement à un large éventail de requêtes variées, et par conséquent de satisfaire à de nombreux besoins. Suivant le mode de réalisation pratique des éléments interchangeables, la transformation d'un fauteuil à cinq roues en un fauteuil à quatre roues ou vice-versa peut se faire manuellement ou, le cas échéant, avec un outillage simple. Les trains partiels décrits peuvent par exemple être conçus avec des composants à manipulation facile comme des roues à démontage rapide (quick release), etc.

## Revendications

1. Fauteuil roulant du type coquille comportant une coquille (1), un châssis (2) et un équipement de roues porteuses (3, 4, 5), **caractérisé en ce que** ledit équipement de roues porteuses (3, 4, 5) comprend deux roues (5) montées à demeure sur le châssis (2) et deux trains complémentaires (3, 4) interchangeables comprenant l'un deux roues (13) indépendantes et l'autre trois roues (3a, 3b, 3c) indépendantes de telle sorte que le fauteuil présente à volonté un équipement à quatre roues porteuses ou un équipement à cinq roues porteuses.

2. Fauteuil selon la revendication 1, **caractérisé en ce que** le châssis (2) et les trains de roues complémentaires (3, 4) sont agencés pour permettre le remplacement de ces derniers par des moyens manuels.

3. Fauteuil selon la revendication 1, **caractérisé en ce que** les roues (5) montées à demeure sur le châssis (2) sont des roues orientables, situées à l'avant du châssis.

4. Fauteuil selon la revendication 3, **caractérisé en ce que** dans le train complémentaire (3) comprenant trois roues indépendantes (3a, 3b, 3c), ces dernières sont montées de manière à être orientables librement chacune sur un élément d'armature (10, 12) qui se fixe au châssis (2).

5. Fauteuil selon la revendication 3, **caractérisé en ce que** dans le train complémentaire (4) comprenant deux roues (13), ces deux roues supportent le châssis (2) par l'intermédiaires de manchons (28) jouant le rôle de corps de paliers solidaires de deux longerons (8) disposés en parallèle dans le châssis (2), ces roues (13) étant indépendantes en rotation mais coaxiales.

6. Fauteuil roulant selon l'une des revendications précédentes, **caractérisé en ce qu'**un train partiel de roues porteuses (4) comportant deux roues porteuses coaxiales (13), qui pivotent indépendamment dans des manchons (28) jouant le rôle de corps de paliers solidaires de deux éléments parallèles (8) du châssis (2), comporte, entre ces roues (13), un arbre (14) équipé d'un dispositif à commande au pied (18, 19, 26, 27) ayant une position active et une position inactive, et qui bloque lesdites roues (13) quand il est amené en position active.

7. Fauteuil selon la revendication 6, **caractérisé en ce que** chacune desdites roues (13) coaxiales porte dans sa face interne une denture (27) coaxiale à son moyeu, qui coopère avec une pièce de garde (26) montée à pivotement sur un longeron (8) de l'armature de châssis (2), **en ce que** lesdites pièces de garde (26) sont munies d'un premier segment denté (26a, 26b) qui peut s'engager dans ladite denture (27) de la roue, et **en ce qu'**elles sont commandées, par l'intermédiaire de parties creuses (32), par des leviers (19) solidaires de l'arbre (14), de manière à être soulevées ou à retomber dans les dentures (27) des roues (13) selon la position dudit organe de commande au pied (18).

## Patentansprüche

1. Sitzschalenrollstuhl, der eine Sitzschale (1), ein Fahrgestell (2) und einen Satz Stützräder (3, 4, 5) umfasst, **dadurch gekennzeichnet, dass** dieser Satz Stützräder (3, 4, 5) zwei dauerhaft an das Fahrgestell (2) montierte Räder (5) und zwei zusätzliche austauschbare Einheiten (3, 4) umfasst, von denen die eine zwei unabhängige Räder (13) umfasst und die andere drei unabhängige Räder (3a, 3b, 3c) umfasst, so dass der Rollstuhl wahlweise einen Satz mit vier Stützrädern oder einen Satz mit fünf Stützrädern aufweist.

2. Rollstuhl nach Anspruch 1, **dadurch gekennzeichnet, dass** das Fahrgestell (2) und die zusätzlichen Radeinheiten (3, 4) so angeordnet sind, dass Letztere von Hand ausgetauscht werden können.

3. Rollstuhl nach Anspruch 1, **dadurch gekennzeichnet, dass** die dauerhaft an das Fahrgestell (2) montierten Räder (5) Lenkräder sind, die sich auf der Vorderseite des Rahmens befinden.

4. Rollstuhl nach Anspruch 3, **dadurch gekennzeichnet, dass** bei der zusätzlichen Einheit (3), die drei unabhängige Räder (3a, 3b, 3c) umfasst, diese Letzteren jeweils frei schwenkbar an ein Rahmenelement (10, 12) montiert sind, das am Fahrgestell (2) befestigt ist.

5. Rollstuhl nach Anspruch 3, **dadurch gekennzeichnet, dass** bei der zusätzlichen Einheit (4), die zwei Räder (13) umfasst, diese zwei Räder das Fahrgestell (2) mit Hilfe von Muffenrohren (28) tragen, die als Lagerkörper dienen, die einstückig mit zwei im Fahrgestell (2) parallel angeordneten seitlichen Längsträgern (8) ausgeführt sind, wobei die Räder (13) drehbar unabhängig, aber koaxial sind.

6. Rollstuhl nach einem der vorhergehenden Ansprüche, **dadurch gekennzeichnet, dass** eine Stützräder-Teileinheit (4), die zwei koaxiale Stützräder (13) umfasst, die sich unabhängig in Muffenrohren (28) drehen, die als Lagerkörper dienen, die einstückig mit zwei parallelen Elementen (8) des Fahrgestells (2) ausgeführt sind, zwischen diesen Rädern (13) eine Welle (14) umfasst, die mit einer fußbetätigten Steuervorrichtung (18, 19, 26, 27) versehen ist, die eine aktive Stellung und eine inaktive Stellung aufweist und die die Räder (13) blockiert, wenn sie in die aktive Stellung gebracht wird.

7. Rollstuhl nach Anspruch 6, **dadurch gekennzeichnet, dass** jedes der koaxialen Räder (13) auf seiner Innenseite eine zu seiner Nabe koaxiale Zahnung (27) trägt, wobei die Zahnung mit einem Schutzelement (26) zusammenarbeitet, das drehbar auf einen seitlichen Längsträger (8) des Fahrgestellrahmens (2) montiert ist, dass diese Schutzelemente (26) mit einem ersten gezahnten Segment (26a, 26b) versehen sind, das in die Verzahnung (27) auf dem Rad eingreifen kann, und dass diese mit Hilfe von ausgesparten Teilen (32) durch einstückig mit der Welle (14) ausgeführte Hebel (19) so gesteuert werden, dass sie je nach der Stellung des fußbetätigten Steuerelements (18) angehoben werden oder in die Zahnung (27) auf den Rädern (13) absinken.

## Claims

1. A wheelchair of the seat shell type, comprising a seat shell (1), a chassis (2) and a set of load-bearing wheels (3, 4, 5), **characterised in that** said set of load-bearing wheels (3, 4, 5) comprises two wheels (5) permanently mounted on the chassis (2) and two supplementary interchangeable units (3, 4), one comprising two independent wheels (13) and the other comprising three independent wheels (3a, 3b, 3c), such that the wheelchair has, as desired, a set of four load-bearing wheels or a set of five load-bearing wheels.

2. A wheelchair according to claim 1, **characterised in that** the chassis (2) and the supplementary wheel units (3, 4) are arranged to allow manual replacement of the latter.

3. A wheelchair according to claim 1, **characterised in that** the wheels (5) mounted permanently on the chassis (2) are orientable wheels, situated at the front of the chassis.

4. A wheelchair according to claim 3, **characterised in that**, in the supplementary unit (3) comprising three independent wheels (3a, 3b, 3c), the latter are each mounted in freely orientable manner on a frame element (10, 12) fixed to the chassis (2).

5. A wheelchair according to claim 3, **characterised in that**, in the supplementary unit (4) comprising two wheels (13), said two wheels support the chassis (2) by means of sleeve tubes (28) acting as bearing bodies integral with two side rails (8) disposed in parallel in the chassis (2), said wheels (13) being rotationally independent but coaxial.

6. A wheelchair according to one of the preceding claims, **characterised in that** a partial load-bearing wheel unit (4) comprising two coaxial load-bearing wheels (13), which pivot independently in sleeve tubes (28) acting as bearing bodies integral with two parallel elements (8) of the chassis (2), comprises, between these wheels (13), a shaft (14) equipped with a foot-operated control device (18, 19, 26, 27) having an active position and an inactive position, and which locks said wheels (13) when it is adjusted into the active position.

7. A wheelchair according to claim 6, **characterised in that** each of said coaxial wheels (13) bears on its inner face toothing (27) coaxial to its hub, which toothing interacts with a guard piece (26) mounted pivotally on a side rail (8) of the chassis frame (2), **in that** said guard parts (26) are provided with a first toothed segment (26a, 26b) which is capable of engaging with said toothing (27) on the wheel, and **in that** they are controlled, by means of recessed parts (32), by levers (19) integral with the shaft (14), so as to be raised or to drop into the toothing (27) on the wheels (13) according to the position of said foot-operated control member (18).
